# EUROPÄISCHE PATENTSCHRIFT

(11) **EP 1 141 570 B1**
(45) Veröffentlichungstag und Bekanntmachung des Hinweises auf die Patenterteilung: **23.03.2005**
(21) Anmeldenummer: 99967930.1
(22) Anmeldetag: 10.12.1999
(51) Int. Cl.: F16D 55/40

(54) **ANTRIEBSEINHEIT, INSBESONDERE FÜR EIN FLURFÖRDERFAHRZEUG**
DRIVE UNIT, NOTABLY FOR A LIFT TRUCK
TRANSMISSION, NOTAMMENT POUR CHARIOT ELEVATEUR

(30) Priorität: 16.12.1998 DE 19857962
(43) Veröffentlichungstag der Anmeldung: 10.10.2001
(60) Teilanmeldung: 05001070.1
(73) Patentinhaber: ZF FRIEDRICHSHAFEN Aktiengesellschaft, 88038 Friedrichshafen (DE)
(72) Erfinder: STAMMBERGER, Christian, D-99867 Gotha (DE); SCHARFENBERG, Stephan, D-99869 Tüttleben (DE); STÜBNER, Frank, D-99894 Friedrichroda (DE)
(86) Internationale Anmeldenummer: PCT/EP1999/009729
(87) Internationale Veröffentlichungsnummer: WO 2000/036317

(56) Entgegenhaltungen:
- EP-A- 0 138 345
- WO-A-83/03124
- DE-A- 3 211 366
- DE-C- 19 646 010
- GB-A- 1 341 682
- GB-A- 2 140 086

## Beschreibung

Die Erfindung betrifft eine Antriebseinheit nach dem Oberbegriff des Patentanspruchs 1. Derartige Antriebe werden hauptsächlich in Flurförderfahrzeugen, wie z. B. Gabelstaplern, eingesetzt. Derartige Antriebe benötigen, um im dynamischen Betrieb zu verzögern, eine Betriebsbremse und, um im statischen Zustand, z. B. beim Heben einer Last, bei welcher das Fahrzeug sich nicht bewegen darf, eine Feststellbremse. Um die Antriebsmotoren möglichst kompakt ausgestalten zu können, sind bei diesen Antriebseinheiten Stirnradgetriebe vorgesehen, welche die Antriebsdrehzahl reduzieren und somit das Antriebsmoment vergrößern.

Die DE 40 10 742 C1 offenbart eine Antriebseinheit eines Flurförderfahrzeugs, bei welcher das Antriebsrad über ein Stirnradgetriebe und eine nachgeschaltete Planetenstufe angetrieben wird und als Betriebs- und Feststellbremse eine innerhalb des Getriebegehäuses angebrachte Lamellenbremse vorgesehen ist. Diese Lamellenbremse wird betätigt, indem eine Druckplatte über einen Hebel betätigt die Lamellenbremse schließt. Der Hebel kann nur bewegt werden, indem eine Zugkraft auf einen Seilzug gebracht wird, welcher mit dem Hebel verbunden ist. Somit wird durch dosiertes Aufbringen der Zugkraft auf den Seilzug die Betriebsbremse aktiviert und durch Halten der maximalen Zugkraft auf den Seilzug die Feststellbremse angelegt. Dies hat den Nachteil, daß bei einem gerissenen Seilzug jegliche Bremse des Fahrzeugs ohne Funktion ist. Des Weiteren muß der Seilzug optimal im Fahrzeug verlegt sein, um unnötige interne Reibung des Seilzugs zu verhindern und somit ein gleichmäßiges Ansprechen der Betriebsbremse zu gewährleisten.

Die DE 43 21 699 C1 offenbart eine Antriebseinheit für ein Flurförderfahrzeug, bei welcher das Antriebsrad über eine angetriebene Stirnradstufe und eine nachgeschaltete Planetenstufe angetrieben wird. Die Antriebseinheit weist eine integrierte Lamellenbremse auf, welche als Betriebs- und Feststellbremse benutzt wird. Die Betriebsbremse wird betätigt, indem ein hydraulischer Zylinder mit Druck beaufschlagt wird und dadurch ein Hebel in Bewegung gesetzt wird, um eine Druckplatte auf ein Lamellenpaket zu pressen und das Lamellenpaket zu schließen. Je höher der Druck im Hydraulikzylinder, um so größer die Bremswirkung. Die Feststellbremse wird dergestalt betätigt, daß ein an dem Hebel befestigter Seilzug unter Zugspannung gesetzt wird und die Zugspannung so lang aufrechterhalten bleibt, bis die Feststellbremse wieder entriegelt wird. Durch die hydraulische Kraftübertragung bei der Betriebsbremse, wird die ungünstige Reibung eines Seilzugs für das dosierte Abbremsen des Fahrzeugs eliminiert und es ist möglich, die Hydraulikleitung im Fahrzeug optimal zu verlegen. Da die Feststellbremse über einen unter Zugspannung gesetzten Seilzug eingelegt wird, ist es nicht möglich, ein abgestelites Fahrzeug bei einem aerissenen Seilzug im gebremsten Zustand zu halten.

Die GB-A-2 140 086 offenbart einen Drehwerkantrieb, bei welchem ein Antriebsmotor koaxial über mehrere Planetengetriebe einen Abtrieb antreibt. Beabstandet zum Abtrieb ist eine Betätigüngseinrichtung einer Lamellenbremse, welche koaxial zum Abtrieb angeordnet ist, angeordnet, bei welcher im drucklosen Zustand die Lamellenbremse über einen ersten Kolben, welcher durch eine Feder vorgespannt und durch hydraulischen Druck lüftbar ist, geschlossen wird. Innerhalb des ersten Kolbens ist ein zweiter Kolben angeordnet, welcher bei Druckbeaufschlagung und gelüftetem ersten Kolben die Bremse schließt.

Der vorliegenden Erfindung liegt die Aufgabe zugrunde, eine Antriebseinheit für ein Flurförderfahrzeug zu schaffen, bei welcher bei einem Defekt der Verbindungen vom Fahrzeug zur Antriebseinheit die Feststellbremse automatisch eingelegt wird und bei geöffneter Feststellbremse das Fahrzeug dosiert über die Betriebsbremse abgebremst werden kann und die Bremse und deren Betätigungseinrichtung so in der Antriebseinheit angeordnet ist, daß der Raumbedarf der Antriebseinheit minimiert wird.

Die Aufgabe wird mit einer auch die kennzeichnenden Merkmale des Hauptanspruchs aufweisenden gattungsgemäßen Antriebseinheit gelöst.

Erfindungsgemäß besteht die Antriebseinheit aus einem ersten Stirnradgetriebe, welches direkt oder über eine nachgeschaltete Planetenstufe eine Nabe für ein Antriebsrad antreibt. Das Abtriebsrad des Stirnradgetriebes ist mit einem inneren Lamellenträger, welcher die Innenlamellen aufnimmt, drehfest verbunden und die Außenlamellen sind drehfest in einem feststehenden Gehäuseteil angeordnet. Indem eine Druckplatte das Lamellenpaket zusammenpreßt, wird das Abtriebsrad des Stirnradgetriebes kraftschlüssig mit dem feststehende Gehäuseteil verbunden. Je nach Anpreßkraft der Druckplatte auf das Lamellenpaket verändert sich das Bremsmoment. Die Feststellbremse wird eingelegt, indem ein Federpaket einen Kolben eines ersten Hydraulikzylinders axial bewegt und diese axiale Bewegung wird auf einen zweiten Kolben übertragen, welcher in dem Kolben des ersten Hydraulikzylinders angebracht ist und drückt die Druckplatte auf das Lamellenpaket, um dieses zu schließen. Dadurch ist das Lamellenpaket im drucklosen Zustand immer über die Federkraft geschlossen und es ist gewährleistet, daß die Feststellbremse bei einem Defekt, wie z. B. dem Riß eines Seilzugs oder dem Leck in einer Hydraulikleitung eingelegt bleibt. Durch Druckbeaufschlagung des ersten Hydraulikzylinders wird die Feststellbremse gelöst. Da sich in dem Kolben des ersten Hydraulikzylinders ein zweiter Kolben befindet, kann die Betriebsbremse bei druckbeaufschlagtem ersten Hydraulikzylinder durch Druckbeaufschlagen des zweiten Kolbens betätigt werden. Je nach Größe des hydraulischen Drucks auf den zweiten Kolben wird das Moment der Bremse verändert. Durch diese Ausführung der Betriebsbremse mit einer hydraulischen Betätigungseinrichtung läßt sich das Bremsmoment sehr gut dosieren. Die Lamellenbremse ist direkt dem ersten Stirnradgetriebe nachgeschaltet und innerhalb des Gehäuseteils angeordnet. Die Betätigungseinrichtung der Lamellenbremse ist koaxial zur Lamellenbremse angeordnet, wobei der Antrieb der Stirnradstufe oberhalb der Betätigungseinrichtung angeordnet ist und somit durch diese Anordnung eine sehr kompakte Antriebseinheit geschaffen wird. Die Druckplatte, welche auf das Lamellenpaket gedrückt wird, ist drehfest mit dem Abtriebsrad des Stirnradgetriebes verbunden und zwischen dieser Druckplatte und dem zweiten Kolben ist ein Axiallager angeordnet, so daß alle Kolben der Betätigungseinrichtung reine axiale Bewegungen ausführen. Dadurch ist eine optimale Auslegung der Dichtungen der Betätigungseinrichtung möglich, da die Dichtungen ebenfalls reine axiale Bewegungen ausführen. Durch die Integration der Betätigungseinrichtung für die Betriebsbremse und der Betätigungseinrichtung für die Feststellbremse in einer Betätigungsvorrichtung wird der zur Verfügung stehende Bauraum für die Antriebseinheit optimal ausgenutzt. Durch die Erfindung wird eine Antriebseinheit geschaffen, welche gewährleistet, daß auch bei einem Defekt in der Druckversorgung der Bremsanlage die Feststellbremse automatisch eingelegt wird und bei entriegelter Feststellbremse die Betriebsbremse dosiert betätigt werden kann. Eine Notentriegelung der Feststellbremse ist dadurch möglich, daß entweder der Kolben des ersten Hydraulikzylinders manuell, z. B. durch Eindrehen einer Schraube gegen die Federkraft bewegt wird und somit die Feststellbremse gelöst wird, oder durch Aufbringen eines manuell erzeugten hydraulischen Druckes mit Hilfe z. B. einer Handpumpe, der Kolben des ersten Hydraulikzylinders mit Druck beaufschlagt werden kann, um die Feststellbremse zu lösen. Im normalen Betrieb des Fahrzeugs wird der hydraulische Druck zur Entriegelung der Feststellbremse von einer Pumpe erzeugt, welche im Fahrzeug für z. B. die Lenkung oder die Hubzylinder vorhanden ist. Der Antrieb der Stirnradstufe kann vorzugsweise über einen Elektromotor, welcher direkt an der Antriebseinheit angebaut ist, oder über einen zentralen Motor, welcher über ein Differential jeweils den Antrieb einer Antriebseinheit antreibt. Wird ein zentraler Motor mit einem Differential verwendet, so hat die Anordnung der Betriebs- und Feststellbremse in der Antriebseinheit den weiteren Vorteil, daß gegenüber einer Betriebs- und Feststellbremse am Antriebsmotor jede Antriebseinheit gebremst wird und somit die Bremswirkung in jedem Fall gewährleistet ist, da das Differential nicht der Bremse nachgeschaltet ist.

Diese Ausführung der Bremse bietet den weiteren Vorteil, daß das Fahrzeug mit einem Ventil ausgerüstet werden kann, welches immer dann den hydraulischen Bremskreis drucklos schaltet, wenn die vom Fahrer vorgegebene Geschwindigkeit Null und die Fahrzeuggeschwindigkeit ebenfalls Null ist. Somit wird die Haltebremse, z. B. wenn das Fahrzeug an einer Steigung, wie bei einer Beladerampe, gehalten werden muß, automatisch eingelegt und das Fahrzeug muß in diesem Zustand nicht über die Betriebsbremse oder den Antriebsmotor gehalten werden. Soll wieder angefahren werden, so ist die vorgegebene Geschwindigkeit ≠ 0 und die Haltebremse wird durch Druckbeaufschlagung wieder gelöst.

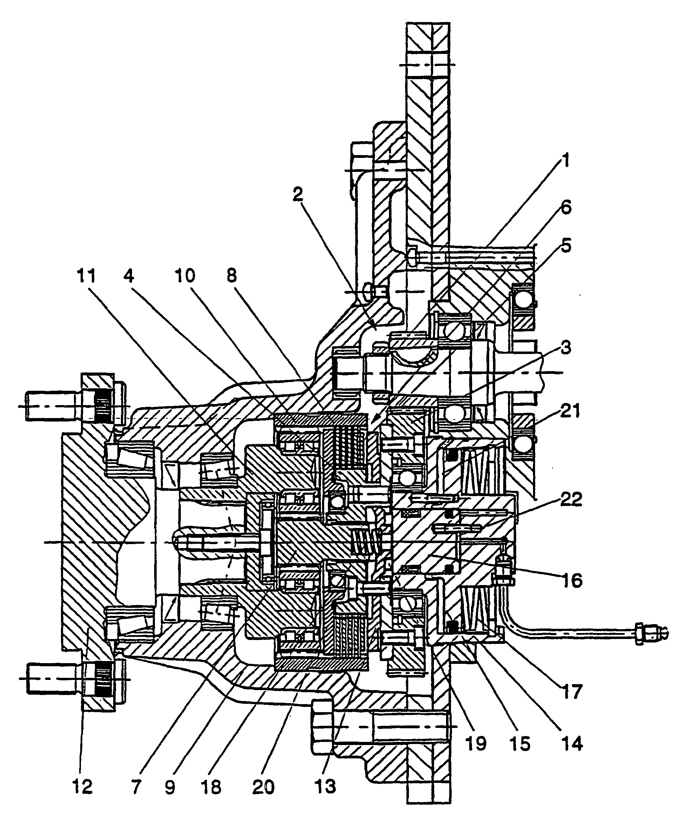

Die einzige Figur zeigt ein Ausführungsbeispiel der Erfindung, bei welcher ein nicht dargestellter Antrieb das Ritzel 1 eines Stirnradgetriebes 2 und somit das Abtriebsrad 3 des Stirnradgetriebes 2 antreibt. Mit dem Abtriebsrad 3 ist drehfest ein Lamellenträger 4, welcher einerseits mit den Innenlamellen 5 einer Lamellenbremse 6 und andererseits einem inneren Zentralrad 7 verbunden ist. Die Außenlamellen 8 sind drehfest über ein Hohlrad 10 mit dem Gehäuseteil 9 verbunden. Das innere Zentralrad 7 treibt einen Planetenträger 11, welcher mit dem Abtrieb 12 der Antriebseinheit verbunden ist, an. Zwischen dem Lamellenträger 4 und dem Abtriebsrad 3 des Stirnradgetriebes 2 ist eine Druckplatte 13 axial verschiebbar, jedoch drehfest mit dem Lamellenträger 4 verbunden. Koaxial zum inneren Zentralrad 7 ist ein erster Hydraulikzylinder 14 mit einem Kolben 15 und einem zweiten Kolben 16 sowie Federn 17 angeordnet. Im drucklosen Zustand drückt die Feder 17 den Kolben 15 gegen den zweiten Kolben 16, welcher sich über ein Lager 19 auf der Druckplatte 13 abstützt, wobei die Druckplatte 13 gegen die Lamellen der Lamellenbremse 6 gedrückt wird. Die Lamellen der Lamellenbremse 6 stützen sich auf einer Druckplatte 20, welche im Hohlrad 10 axial fixiert und im Gehäuseteil 9 angeordnet ist, ab. Die Lamellenbremse 6 verbindet somit in diesem Zustand den Lamellenträger 4 kraftschlüssig mit dem Gehäuseteil 9 und hält die Antriebseinheit in Form einer Feststellbremse gebremst. Wird der Raum 21 über eine nicht dargestellte Pumpe mit Druck beaufschlagt, so bewegt sich der Kolben 15 gegen die Federkraft der Feder 17 bis zu seinem Anschlag. Die Feder 18 drückt die Druckplatte 13 und den zweiten Kolben 16 soweit zurück, bis der zweite Kolben 16 im Kolben 15 ansteht. Indem die Druckplatte 13 nicht mehr auf die Lamellenbremse 6 gedrückt wird, ist diese geöffnet. Die Feder 18 erfüllt einerseits die Funktion, daß die Lamellenbremse 6 gelüftet wird und andererseits das Lager 19 immer unter Vorspannung bleibt. Wird nun der Raum 22 mit Druck beaufschlagt, so bewegt sich der zweite Kolben 16 in axialer Richtung und drückt über das Lager 19 die Druckplatte 13 auf die Lamellen der Lamellenbremse 6. Je nach Höhe des Drucks im Raum 22 kann das Bremsmoment der Lamellenbremse 6 eingestellt werden. Bei einem Defekt an der Antriebsanlage oder einem Leck in der Hydraulikanlage baut sich der Druck im Raum 21 und Raum 22 ab, so daß die Druckplatte 13 über das Lager 19 den zweiten Kolben 16 den Kolben 15 von der Feder 17 auf die Lamellenbremse 6 gedrückt wird und diese schließt.

### Bezugszeichen

- 1: Ritzel
- 2: Stirnradgetriebe
- 3: Abtriebsrad
- 4: Lamellenträger
- 5: Innenlamellen
- 6: Lamellenbremse
- 7: Inneres Zentralrad
- 8: Außenlamelle
- 9: Gehäuseteil
- 10: Hohlrad
- 11: Planetenträger
- 12: Abtrieb
- 13: Druckplatte
- 14: ersten Hydraulikzylinder
- 15: Kolben
- 16: zweiter Kolben
- 17: Feder
- 18: Feder
- 19: Lager
- 20: Druckplatte
- 21: Raum
- 22: Raum

## Patentansprüche

1. Antriebseinheit, insbesondere für ein Flurförderfahrzeug, bei welcher ein Abtriebsrad (3) eines angetriebenen Stirnradgetriebes (2) durch Betätigen einer Betätigungseinrichtung (14, 15, 16) einer Lamellenbremse (6) bremsbar ist, wobei über die Lamellenbremse ein feststehendes Gehäuseteil (9) mit dem Abtriebsrad (3) des Stirnradgetriebes verbindbar ist, **dadurch gekennzeichnet, daß** die Betätigungseinrichtung (14, 15, 16) koaxial zum Abtriebsrad (3) des Stirnradgetriebes (2) angeordnet ist, wobei die Betätigungseinrichtung (14, 15, 16) aus einem Hydraulikzylinder (14), einem ersten durch Federkraft betätigbaren und durch Druckbeaufschlagung lüftbaren Kolben (15) und einem zweiten durch Druckbeaufschlagung betätigbaren und durch Federkraft lüftbaren Kolben (16) besteht, wobei die Lamellenbremse (6) durch Druckbeaufschlagen eines ersten Raumes (21), gebildet durch den ersten Kolben (15), den Hydraulikzylinder (14) und den zweiten Kolben (16), geöffnet wird, indem der erste Kolben (15) gegen die Federkraft des ersten Kolbens (15) gelüftet wird und durch Druckbeaufschlagen eines zweiten Raumes, gebildet durch den ersten Kolben (15) und den zweiten Kolben (16), geschlossen wird, indem der zweite Kolben (16) gegen die Federkraft des zweiten Kolbens (16) betätigt wird und durch Drucklosschalten des ersten Raumes (21) und des zweiten Raumes (22) geschlossen wird, und der erste Kolben (15) und der zweite Kolben (16) innerhalb des Hydraulikzylinders (14) angeordnet sind und die Druckmittelzuführung zum zweiten Raum (21) im ersten Kolben (15) angeordnet ist.

2. Antriebseinheit nach Anspruch 1, **dadurch gekennzeichnet, daß** der erste Kolben (15) einen Zylinder für den zweiten Kolben (16) bildet.

3. Antriebseinheit nach Anspruch 1, **dadurch gekennzeichnet, daß** im drucklosen Zustand durch manuelles Bewegen des ersten Kolbens (15) die Lamellenbremse (6) geöffnet wird.

4. Antriebseinheit nach Anspruch 1, **dadurch gekennzeichnet, daß** die Lamellenbremse (6) automatisch immer dann durch Drucklosschalten des ersten Raumes (21) und des zweiten Raumes (22) geschlossen wird, wenn die vorgegebene Drehzahl und die tatsächliche Drehzahl des angetriebenen Stirnradgetriebes (2) gleich Null sind.

5. Antriebseinheit nach Anspruch 1, **dadurch gekennzeichnet, daß** die Lamellenbremse (6) automatisch immer dann durch Druckbeaufschlagen des ersten Raumes (21) geöffnet wird, wenn die vorgegebene Drehzahl und die tatsächliche Drehzahl des angetriebenen Stirnradgetriebes (2) ungleich Null sind.

6. Antriebseinheit nach Anspruch 1, **dadurch gekennzeichnet, daß** die Lamellenbremse (6) durch Drucklosschalten des ersten Kolbens (15) geschlossen wird, indem der erste Kolben (15) sich durch die Federkraft in axialer Richtung bewegt und diese axiale Bewegung auf den zweiten Kolben (16) überträgt.

## Claims

1. Drive unit, in particular for an industrial truck, in which a driven wheel (3) of a driven spur gear unit (2) can be braked by operating an operating device (14, 15, 16) of a multi-disc brake (6), wherein a stationary casing part (9) can be connected to the driven wheel (3) of the spur gear unit by means of the multi-disc brake, **characterised in that** the operating device (14, 15, 16) is disposed coaxially with the driven wheel (3) of the spur gear unit (2), wherein the operating device (14, 15, 16) consists of a hydraulic cylinder (14), a first piston (15), which can be operated by spring force and released by pressurization, and a second piston (16), which can be operated by pressurization and released by spring force, wherein the multi-disc brake (6) is released by pressurizing a first space (21), formed by the first piston (15), the hydraulic cylinder (14) and the second piston (16), as a result of releasing the first piston (15) against the spring force of the first piston (15), and closed by pressurizing a second space, formed by the first piston (15) and the second piston (16), as a result of operating the second piston (16) against the spring force of the second piston (16) and by rendering the first space (21) and the second space (22) pressureless, and the first piston (15) and the second piston (16) are disposed inside the hydraulic cylinder (14) and the pressure medium supply to the second space (21) is disposed in the first piston (15).

2. Drive unit according to Claim 1, **characterised in that** the first piston (15) forms a cylinder for the second piston (16).

3. Drive unit according to Claim 1, **characterised in that** the multi-disc brake (6) is released in the pressureless state by manually moving the first piston (15).

4. Drive unit according to Claim 1, **characterised in that** the multi-disc brake (6) is always automatically closed by rendering the first space (21) and the second space (22) pressureless when the predetermined speed and the actual speed of the driven spur gear unit (2) are equal to zero.

5. Drive unit according to Claim 1, **characterised in that** the multi-disc brake (6) is always automatically released by pressurizing the first space (21) when the predetermined speed and the actual speed of the driven spur gear unit (2) are equal to zero.

6. Drive unit according to Claim 1, **characterised in that** the multi-disc brake (6) is closed by rendering the first piston (15) pressureless as a result of the first piston (15) moving in the axial direction through the spring force and transmitting this axial movement to the second piston (16).

## Revendications

1. Unité de transmission, en particulier d'un chariot de manutention, sur laquelle un pignon de sortie (3) d'un réducteur à pignons cylindriques entraîné (2) peut être freiné en actionnant un dispositif d'actionnement (14, 15, 16) d'un frein multidisque (6), sachant que par l'intermédiaire du frein multidisque il est possible de lier une partie fixe du carter (9) au pignon de sortie (3) du réducteur à pignons cylindriques, **caractérisée en ce que** le dispositif d'actionnement (14, 15, 16) est disposé de façon coaxiale par rapport au pignon de sortie (3) du réducteur à pignons cylindriques (2), sachant que le dispositif d'actionnement (14, 15, 16) est composé d'un vérin hydraulique (14), d'un premier piston (15) qui peut être actionné par la force d'un ressort et mis à l'air libre par pressurisation, et d'un deuxième piston (16) qui peut être actionné par pressurisation et mis à l'air libre par la force d'un ressort, sachant que le frein multidisque (6) est ouvert par pressurisation d'une première chambre (21) - celle-ci étant formée par le premier piston (15), le vérin hydraulique-(14) et le deuxième piston (16) - en mettant à l'air libre le premier piston (15) en agissant contre la force du ressort du premier piston (15), et sachant que le frein multidisque (6) est fermé en pressurisant une deuxième chambre, celle-ci étant formée par le premier piston (15) et le deuxième piston (16), en actionnant le deuxième piston (16) contre la force du ressort du deuxième piston (16), et sachant que le frein multidisque (6) est fermé par la pressurisation de la première chambre (21) et de la deuxième chambre (22), et sachant que le premier piston (15) et le deuxième piston (16) sont disposés à l'intérieur du vérin hydraulique (14), et sachant que la conduite d'amenée de l'agent de pression vers la deuxième chambre (22) est disposée dans le premier piston (15).

2. Unité de transmission selon la revendication 1, **caractérisée en ce que** le premier piston (15) forme un vérin pour le deuxième piston (16).

3. Unité de transmission selon la revendication 1, **caractérisée en ce que** à l'état sans pression le frein multidisque (6) est ouvert en mouvant manuellement le premier piston (15).

4. Unité de transmission selon la revendication 1, **caractérisée en ce que** le frein multidisque (6) est fermé par évacuation de l'air de la première chambre (21) et de la deuxième chambre (22), à chaque fois que le régime de consigne et le régime réel du réducteur à pignons cylindriques entraîné (2) sont égaux à zéro.

5. Unité de transmission selon la revendication 1, **caractérisée en ce que** le frein multidisque (6) est ouvert par évacuation de l'air de la première chambre (21), à chaque fois que le régime de consigne et le régime réel du réducteur à pignons cylindriques entraîné (2) ne sont pas égaux à zéro.

6. Unité de transmission selon la revendication 1, **caractérisée en ce que** le frein multidisque (6) est fermé par évacuation de l'air du premier piston (15), lorsque le premier piston (15) se déplace par la force du ressort en sens axial, en transmettant ce mouvement axial au deuxième piston (16).
